# EUROPEAN PATENT APPLICATION

(11) **EP 1 679 863 A1**
(43) Date of publication of application: **12.07.2006**
(21) Application number: 06000303.5
(22) Date of filing: 09.01.2006
(51) Int. Cl.: H04M 1/247

(54) **Mobile terminal and system providing multilingual support**

(30) Priority: 11.01.2005 KR 2005002628
(71) Applicant: LG Electronics Inc., Yongdungpo-Gu Seoul (KR)
(72) Inventor: Choi, Won-Su, Gyeonggi-Do (KR)
(74) Representative: Katérle, Axel

(57) **Abstract**

A mobile terminal and system providing multilingual support, are discussed. According to an embodiment, the system includes a server configured (110) to store fonts of different languages of contries, a mobile terminal (120) configured to download a multilingual software module from the server through a wireless network, and/or to receive a multilingual software module stored (130) in an external storage media, and the external storage media configured to be received by the mobile terminal.

## Description

### BACKGROUND OF THE INVENTION

### 1. Field of the Invention

The present invention relates to a mobile terminal, and more particularly, to a mobile terminal and system providing multilingual support, thereby allowing easy language switchover with respect to a user interface.

### 2. Description of the Background Art

In general, mobile terminals provide users only with an interface of language set therein. The majority of mobile terminals only support the language of the corresponding country or a language of the corresponding country (if not English) and English. As a result, in cases where owners of the mobile terminals do not or cannot use the language of the country where they reside, they have difficulties in using the mobile terminals.

For example, a mobile terminal commonly sold and/or used in Korea supports Korean and English, e.g., not Japanese and Chinese. Thus, when Japanese or Chinese persons who stay in Korea intend to use such mobile terminals, they will have difficulty or will be inconvenienced.

In order to eliminate such inconvenience, a technique has been devised. According to this technique, user-notification messages such as "incoming call", "new message" and "No SVC Area" in multiple languages are embedded and character strings of different languages of respective countries corresponding to respective keys of the mobile terminal are embedded in the mobile terminal, whereby the user can designate a language according to a selection from a menu and use the character fonts of a desired language of a country.

However, in the related art, since much memory space is occupied in proportion to the number of languages embedded in the mobile terminal, there is a limit to the number of languages which can be embedded. Accordingly, the most widely used language such as English or Japanese is given weight as an embedded language. Consequently, a minority or some people still cannot use the mobile terminal because of the unavailability of their desired language in the mobile terminal.

Moreover, in the related art, since a language table storing fonts is not separated from, but is coded together with, the Operating Software (OS) of the mobile terminal, there is a problem that the entire software of the mobile terminal needs to be changed in order to use a language different from the language embedded in the mobile terminal.

### SUMMARY OF THE INVENTION

Therefore, an object of the present invention is to provide a mobile terminal and system providing multilingual support that enables easy language switchover.

It is another object of the present invention to provide a mobile terminal, method and system for providing multilingual support, which addresses the limitations and disadvantages associated with the related art.

To achieve these and other advantages and in accordance with the purpose of the present invention, as embodied and broadly described herein, there is provided according to an embodiment a system providing multilingual support, comprising: a server configured to store fonts of different languages of countries; a mobile terminal configured to download a multilingual software module from the server through a wireless network, and/or to receive a multilingual software module stored in an external storage media; and the external storage media configured to be received by the mobile terminal.

According to an aspect of the present invention, there is provided a mobile terminal providing multilingual support, the mobile terminal including internal software structure comprising: a multilingual software module separated from an operating software of the mobile terminal and containing data with respect to a specific language; and a menu text index table hard-coded into the operating software of the mobile terminal and for reading data from the multilingual software module.

According to another aspect of the present invention, there is provided a method of switching a language used in a mobile terminal which includes font data of a first language, the method comprising: obtaining font data of a second language in the mobile terminal by either downloading the second language font data from a server or inserting an external storage medium containing the second language font data in the mobile terminal; and configuring the mobile terminal to apply the obtained second language font data, so that the second language is used in the mobile terminal.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a diagram showing a construction of a system providing multilingual support in accordance with an embodiment of the present invention;
Figure 2 is a diagram illustrating an internal software structure of a mobile terminal providing multilingual support in accordance with and embodiment of the present invention; and
Figure 3 is a flowchart illustrating a process of changing a language used in the mobile terminal in accordance with an embodiment of the present invention.

### DETAILED DESCRIPTION OF THE PREFERRED EMBODIMENTS

Reference will now be made in detail to the preferred embodiments of the present invention, examples of which are illustrated in the accompanying drawings.

In describing the preferred embodiments of the present invention, if a detailed explanation for a related known function or construction is considered to unnecessarily digress from the gist of the present invention, such explanation has been omitted but would be understood by those skilled in the art.

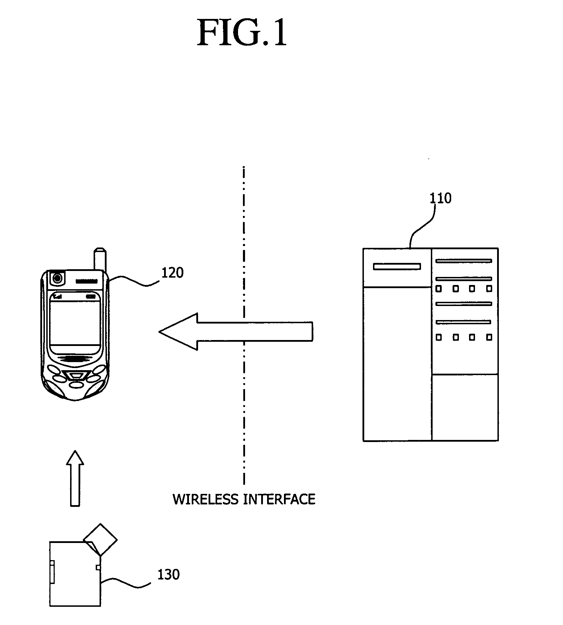

Figure 1 is a diagram illustrating a construction of a system providing multilingual support in accordance with an embodiment of the present invention.

As shown in Figure 1, the multilingual support system in accordance with the present invention includes: a server 110 storing fonts and related data for different languages of respective countries which are used throughout the world as a database; a mobile terminal 120 providing multilingual support and capable of downloading a multilingual software module from the server 100 through a wireless network (or other types of network) and/or supportedly receiving a multilingual software module by using at least one external storage media 130; and the external storage media 130 which stores the multilingual software module in an internal storage space and can be inserted into or mounted on the mobile terminal 120. All the components of the system are operatively coupled/configured.

The server 110 may be a commercial server or a multilingual module management server. The server 110 stores fonts of a language of each country which are used in the world as a database, manages the database by employing periodic updates and error corrections, and transmits a software module of a corresponding language to the mobile terminal 120 requesting a specific language through the wireless network.

The mobile terminal 120 downloads a multilingual software module from the server 110 through the wireless network or supportedly receives a multilingual software module by using the external storage media 130. If a user sets a language switchover by a menu operation on the mobile terminal 120, the mobile terminal 120 reads fonts and string data by interworking between its internal software and the multilingual software module downloaded from the server 110 or received through the external storage media 130, and changes a user interface language displayed on one or more display units of the mobile terminal 120 to the corresponding language.

The external storage media 130 may be a memory card such as an SD (Secure Digital) or CF (Compact Flash) card or a memory stick which stores at least one multilingual software module in its internal storage space, and can be inserted into or mounted on the mobile terminal 120.

For example, in case of mobile terminals used in Korea, basically supported languages are English and Korean. When a Russian, who does not speak English or Korean, uses a mobile terminal acquired in Korea, the user interface language can be changed into Russian simply by inserting an external storage media containing a Russian language module into the mobile terminal or downloading the Russian language module by radio from a multilingual module management server by being connecting with the server wirelessly or some other means. Therefore, the present invention provides an effective way to provide a user-friendly mobile terminal with multilingual capability, thereby enhancing the use of mobile terminals throughout the world.

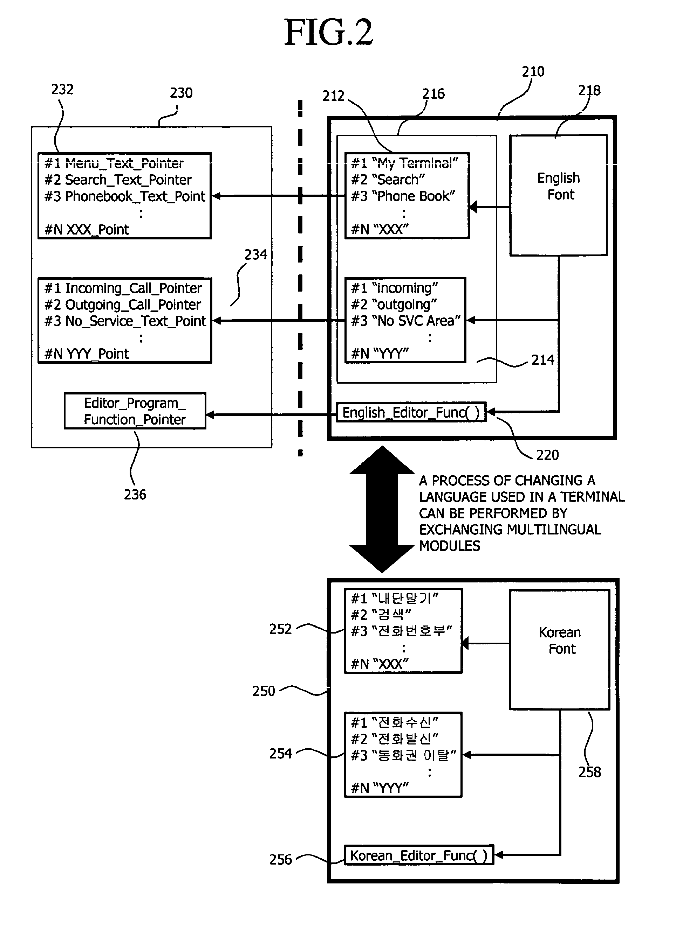

In order to more effectively implement the system providing multilingual support of the mobile terminal having the construction of Figure 1, in the present invention according to an embodiment provides operating software and a multilingual software module of the mobile terminal separated from each other. This will be described with reference to Figure 2.

Figure 2 is a diagram illustrating an internal software structure of the mobile terminal providing multilingual support in accordance with an embodiment of the present invention. This can be applied to the multiple terminal 120 of Figure 1 or other suitable device/system.

With reference to Figure 2, the internal software of the mobile terminal providing multilingual support in accordance with the present invention includes: a multilingual software module 210 separated from the operating software of the mobile terminal and containing data with respect to a specific language; and a menu text index table 230 hard-coded into the operating software of the mobile terminal and reading data from the multilingual software module 210 to a designated location.

The multilingual software module 210 includes: a string table 216 made up of a menu text list 212 of function items written in the specific language and a string text list 214 of message items; data 218 of the corresponding language font; and an editor program 220 for the corresponding language for editing documents, etc.

The menu text list 212 contains menu items, for example, 'My Terminal' for allowing the user to set a menu or keys of the mobile terminal, 'Search' for providing a search function, 'Phone Book' for storing telephone numbers and e-mail addresses, and so on.

The string text list 214 contains items of user notification message such as 'Incoming' notifying the user of an incoming phone call, 'Outgoing' notifying the user of an outgoing phone call, 'No SVC Area" notifying the user that the user is outside the registered service area, etc.

The language font data 218 can contain all the data associated with language font, including but not limited to, character fonts and font combinations of the corresponding language, and the character spacing. In this example, English font data are stored. The editor program 220 allows the user to edit text when writing a message and prevents a font break or an error occurrence when the user displays a received message in the corresponding language on the screen(s) of the mobile terminal.

The menu text index table 230 is made up of, e.g., a menu text pointer(s) 232 for accessing the menu text list 212 of the multilingual software module 210; a string text pointer(s) 234 for accessing the string text list 214; and an editor program pointer(s) 236 for accessing the editor program 236.

The menu text pointer 232 provides one or more addresses for reading each item existing in the menu text list 212 of the multilingual software module 210. The string text pointer 234 provides one or more addresses for reading each item existing in the string text list 214. In addition, the editor program pointer 236 provides one or more addresses for reading the editor program 220.

Since the multilingual software module 210 is separated from the operating software of the mobile terminal, the language(s) used in the mobile terminal can be changed simply by replacing the multilingual software module 210 with another multilingual software module.

For example, as shown in Figure 2, in case that an English module 210 is currently installed in a user's mobile terminal, if the user wants to change the language used in the mobile terminal from English to Korean, the user replaces or switches the English module 210 with a Korean module 250. As shown in Figure 1, if a language switchover is set after the Korean module 250 is downloaded to the mobile terminal by radio/wirelessly (e.g., by a user manipulating the menu of the mobile terminal) or after an external storage media 130 storing the Korean module 250 is inserted into the mobile terminal, pointers 232, 234 and 236 of the menu text index table 230 are matched to the menu text list 252, the string text list 254 and the editor program 256, respectively. For instance, according to the pointes 232, 234, and 236, the menu text list 252, the string text list 254, and the editor program 256 of the Korean module 250 are now accessed. Thus, data from the matched lists 252 and 254 and program 256 and the Korean font data 258 are loaded and used in the mobile terminal, whereby the language used in the mobile terminal is changed as desired by the user.

According to an embodiment, certain language font data may be embedded or stored in the mobile terminal for subsequent use. Thus, in the above example, if the user desires to switch back to using English in the mobile terminal from the Korean use, then the user can select the English language to configure the mobile terminal to switch to the use of English, without the user having to wirelessly download the English font data or to insert back the English external storage media. In one implementation, multiple pointers may be used to appropriately access desired language font data.

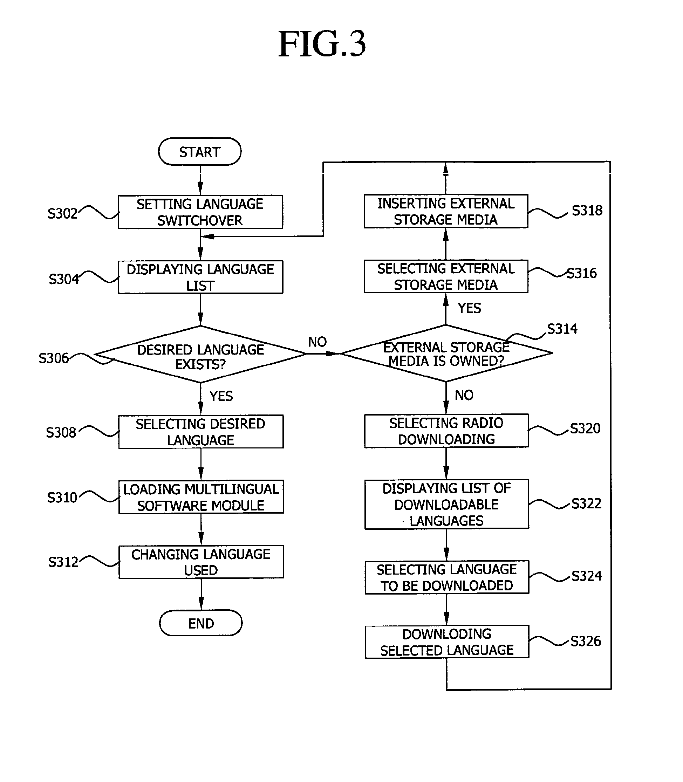

Figure 3 is a flowchart showing a process of changing a language used in a mobile terminal in accordance with an embodiment of the present invention. This process can be implemented in the system of Figure 1 or in other suitable system.

As shown in Figure 3, when the user sets a switchover of the language used in the mobile terminal (S302), a list of the languages to which the mobile terminal itself can be changed is displayed (S304). The user determines whether or not there is a desired language in the displayed language list (S306). If the language desired by the user exists, the user selects the desired language (S308). The mobile terminal then loads a multilingual software module (already stored in the mobile terminal) corresponding to the language selected by the user (S310) and changes (or updates) the language used in the mobile terminal to the corresponding language (S312).

Meanwhile, if the language desired by the user does not exist in the displayed language list, the user determines whether or not there is any external storage media which stores therein a multilingual software module of the user's desired language (S314). If such external storage media is available, then after the user selects the external storage media (S316), the user inserts the external storage media into the mobile terminal (S318). The mobile terminal into which the external storage media is inserted displays a list of languages including the language of the multilingual storage media contained in the external storage media. The user selects a desired language among the displayed languages and changes the language used in the mobile terminal (S304 to S312).

However, in case the user does not have an external storage media containing the user's desired language data and if the user selects radio/wireless downloading (S320), the mobile terminal is radio-connected with the server (e.g., via a network) and displays a list of languages which can be downloaded from the server (S322). If the user selects a desired language from the displayed list of languages (S324), a multilingual software module of the user-selected language is downloaded to the mobile terminal (S326). After the completion of the downloading, the mobile terminal displays a list of languages including the language of the downloaded multilingual software module, and the user selects the desired language from the displayed list of languages and changes the language used in the mobile terminal to the selected language (S304 to S312).

As so far described, the mobile terminal and system providing multilingual support in accordance with the present invention can change the user interface language of the mobile terminal by separating the software in relation to the user interface language of the mobile terminal from the internal operating software of the mobile terminal and by supporting a multilingual software module by downloading or external storage media.

In addition, the mobile terminal and system providing multilingual support in accordance with the present invention removes or minimizes the need for embedding data with respect to many different languages in the mobile terminal, thereby saving a usable amount of internal memory of the mobile terminal and therefore using the memory more efficiently.

Moreover, the present invention has an industrial effect in that mobile terminals such as exports of second-hand mobile terminals are more effectively recycled by making it easy to change the user interface language.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A system providing multilingual support, comprising:
a server configured to store fonts of different languages of countries;
a mobile terminal configured to download a multilingual software module from the server through a wireless network, and/or to receive a multilingual software module stored in an external storage media; and
the external storage media configured to be received by the mobile terminal.

2. The system of claim 1, wherein the server manages the stored fonts by employing periodic updates and error corrections, and transmits a software module of a corresponding language to the mobile terminal requesting a specific language through the wireless network.

3. The system of claim 1, wherein the server is a commercial server or a multilingual module management server.

4. The system of claim 1, wherein the mobile terminal reads fonts and string data by interworking between an internal software of the mobile terminal and a multilingual software module received from the internal software, the server, or the external storage media, and switches a user interface language displayed on a display unit to the corresponding language if a user sets a language switchover by a menu operation.

5. The system of claim 4, wherein the received multilingual software module includes:
a string table including a menu text list of function items written in a specific language and a string text list of message items;
font data corresponding to the specific language; and
an editor program for editing text in the specific language.

6. The system of claim 4, wherein the internal software of the mobile terminal includes a menu text index table hard-coded into an operating software of the mobile terminal and for accessing data from the received multilingual software module.

7. The system of claim 6, wherein the menu index table includes:
a menu text pointer for accessing a menu text list of the received multilingual software module;
a string text pointer for accessing the string text list; and
an editor program pointer for accessing the editor program.

8. The system of claim 1, wherein the external storage media is a memory card or a memory stick, which stores at least one multilingual software module in its internal storage space.

9. The system of claim 8, wherein the external storage media is an SC (Secure Digital) or CF (Compact Flash) card.

10. A mobile terminal providing multilingual support, the mobile terminal including internal software structure comprising:
a multilingual software module separated from an operating software of the mobile terminal and containing data with respect to a specific language; and
a menu text index table hard-coded into the operating software of the mobile terminal and for reading data from the multilingual software module.

11. The mobile terminal of claim 10, wherein the multilingual software module includes:
a string table including a menu text list of function items written in the specific language and a string text list of message items;
font data corresponding to the specific language; and
an editor program for editing a document in the specific language.

12. The mobile terminal of claim 11, wherein the menu text list contains menu items including a first menu item for allowing a user to set a menu or keys of the mobile terminal, a second menu item for providing a search function, and a third menu item for storing telephone numbers and e-mail addresses.

13. The mobile terminal of claim 11, wherein the string text list contains items of user notification messages including a first message for notifying a user of an incoming phone call, a second message for notifying the user of an outgoing phone call, and a third message for notifying the user that the user is not in a registered service area of the mobile terminal

14. The mobile terminal of claim 11, wherein the font data includes data including character fonts and font combinations of the specific language, and character spacing.

15. The mobile terminal of claim 11, wherein the editor program is configured to allow a user to edit documents when writing a message, and to prevent a font break or an error occurrence when the user displays a received message in the specific language on a screen of the mobile terminal.

16. The mobile terminal of claim 10, wherein the menu text index table includes:
a menu text pointer for accessing a menu text list of the multilingual software module;
a string text pointer for accessing a string text list of the multilingual software module; and
an editor program pointer for accessing an editor program.

17. The mobile terminal of claim 10, wherein the multilingual software module stored in the mobile terminal is downloaded from a server via network.

18. The mobile terminal of claim 10, wherein the multilingual software module stored in the mobile terminal is loaded from an external storage media.

19. A method of switching a language used in a mobile terminal which includes font data of a first language, the method comprising:
obtaining font data of a second language in the mobile terminal by either downloading the second language font data from a server or inserting an external storage medium containing the second language font data in the mobile terminal; and
configuring the mobile terminal to apply the obtained second language font data, so that the second language is used in the mobile terminal.

20. The mobile terminal of claim 19, further comprising:
replacing the second language font data with font data of another language in the mobile terminal, without altering an operating software (OS) of the mobile terminal.
